# EUROPÄISCHE PATENTSCHRIFT

(11) **EP 1 891 512 B1**
(45) Veröffentlichungstag und Bekanntmachung des Hinweises auf die Patenterteilung: **18.11.2009**
(21) Anmeldenummer: 06763187.9
(22) Anmeldetag: 19.05.2006
(51) Int. Cl.: G06F 7/72

(54) **BESTIMMUNG EINER MODULAREN INVERSEN**
DETERMINATION OF A MODULAR INVERSE
DETERMINATION D'UNE INVERSE MODULAIRE

(30) Priorität: 25.05.2005 DE 102005024609
(43) Veröffentlichungstag der Anmeldung: 27.02.2008
(73) Patentinhaber: Continental Automotive GmbH, 30165 Hannover (DE)
(72) Erfinder: MEYER, Bernd, 81739 München (DE)
(86) Internationale Anmeldenummer: PCT/EP2006/062443
(87) Internationale Veröffentlichungsnummer: WO 2006/125754

(56) Entgegenhaltungen:
- WO-A-2004/070510
- US-A1- 2005 157 870
- GOLIC J D ET AL: "Multiplicative Masking and Power Analysis of AES" LECTURE NOTES IN COMPUTER SCIENCE, SPRINGER VERLAG, NEW YORK, NY, US, Bd. 2523, 2003, Seiten 198-212, XP002344149 ISSN: 0302-9743
- MEHDI-LAURENT AKKAR ET AL: "Two Power Analysis Attacks against One-Mask Methods" FSE 2004, LNCS 3017, 2004, Seiten 332-347, XP019007573
- TRICHINA E: "Combinational Logic Design for AES SubByte Transformation on Masked Data" IACR 2003, 11. November 2003 (2003-11-11), XP002361190

## Beschreibung

Die Erfindung betrifft ein Verfahren zur seitenkanalangriffsresistenten Berechnung eines Rückgabewertes als einer modularen Inversen eines Eingangswertes mittels eines Moduls.

Seitenkanalangriffe sind eine Klasse von Methoden zur Kryptoanalyse. Im Gegensatz zu bisherigen Angriffen auf kryptographische Anwendungen versucht ein Angreifer dabei nicht den zu Grunde liegenden abstrakten mathematischen Algorithmus zu brechen, sondern attackiert eine spezielle Implementierung eines kryptographischen Verfahrens. Dazu verwendet der Angreifer leicht zugängliche physikalische Messgrößen der konkreten Implementierung wie zum Beispiel Laufzeit der Berechnung, Stromverbrauch und elektromagnetische Abstrahlungen des Prozessors während der Berechnung oder das Verhalten der Implementierung bei induzierten Fehlern. Die physikalischen Messwerte einer einzelnen Berechnung können direkt analysiert werden, zum Beispiel mittels Simple Power Analysis [SPA], oder ein Angreifer zeichnet die Messwerte mehrerer Berechnungen (zum Beispiel unter Verwendung eines Speicheroszilloskops) auf und wertet die Messwerte anschließend statistisch aus, zum Beispiel mittels Differential Power Analysis [DPA]. Seitenkanalangriffe sind häufig wesentlich effizienter als klassische kryptoanalytische Techniken und können selbst Verfahren, die aus Sicht der Algorithmen als sicher angesehen werden, brechen, wenn die Implementierung dieser Algorithmen nicht gegen Seitenkanalangriffe abgesichert ist. Insbesondere für Smartcards und Embedded-Anwendungen sind Gegenmaßnahmen gegen Seitenkanalangriffe wichtig.

Seitenkanalangriffe sind bereits Thema in den folgenden Veröffentlichungen: Kocher: Timing attacks on implementations of Diffie-Hellman, RSA, DSS, and other systems, Crypto 1996, LNCS 1109, Seiten 104-113, Springer; Kocher, Jaffe, Jun: Differential power analysis, Crypto 1999, LNCS 1666, Seiten 388-397, Springer; Messerges, Dabbish, Sloan: Power analysis attacks of modular exponentiation in smartcards, CHES 1999, LNCS 1717, Seiten 144-157, Springer.

Hierbei findet sich in den Boneh, Demillo, Lipton: On the importance of checking cryptographic protocols for faults, Eurocrypt 1997, LNCS 1233, Seiten 37-51, Springer bereits Hinweise auf eine Verwertung der Information aus dem Stromverbrauch und der elektromagnetischen Abstrahlungen des Prozessors während der Berechnung oder des Verhaltens der Implementierung bei induzierten Fehlern.

Mathematische Methoden zur Inversion finden sich auch in Menezes, van Oorschot, Vanstone: Handbook of applied cryptography, CRC-Press 1996.

Maskierungstechniken für. Kryptoverfahren, insbesondere für DES und AES sind auch bekannt aus Goubin, Patarin: DES and differential power analysis, CHES 1999, LNCS 1717, Seiten 158-172, Springer; Akkar, Giraud: An implementation of DES and AES, secure against some attacks, CHES 2001, LNCS 2162, Seiten 309-318, Springer; Messerges: Securing the AES finalists against power analysis attacks, FSE 2000, LNCS 1978, Seiten 150-164, Springer; Coron, Goubin: On boolean and a-rithmetic masking against differential power analysis, CHES 2000, LNCS 1965, Seiten 213-237, Springer; Trichina, de Seta, Germani: Simplified adaptive multiplicative masking for AES and its securized implementation, CHES 2002, LNCS 2523, Seiten 187-197, Springer; Golic, Tymen: Multiplicative masking and power analysis of AES, CHES 2002, LNCS 2523, Seiten 198-212, Springer.

Die Erzeugung digitaler Signaturen nach dem Digital signature standard ist auch thematisiert in FIPS 186: Digital signature standard, Federal Information Processing Standards Publication 186, NIST 1997.

Ziel der Erfindung ist der Schutz der modularen Inversion gegen insbesondere SPA und DPA. Viele kryptographische Verfahren (insbesondere Public-Key Verfahren) verwenden Arithmetiken in endlichen Körpern. Ein wichtiger dabei verwendeter Rechenschritt ist die Berechnung modularer Inversionen in endlichen Körpern.

Verfahren zur modularen Inversion beruhen üblicherweise entweder auf Algorithmen zur Berechnung größter gemeinsamer Teiler (erweiterter euklidischer Algorithmus oder Varianten hiervon wie beispielsweise der binär arbeitende Steinsche Algorithmus) oder verwenden den kleinen Fermatschen Satz und führen damit die Inversion auf eine modulare Exponentiation zurück. Algorithmen auf Basis der Berechnung eines größten gemeinsamen Teilers haben einen stark datenabhängigen Ablauf: Die Anzahl der Divisionen lässt zum Beispiel Rückschlüsse auf die zu invertierende Zahl zu. Beim binär arbeitenden Steinschen Algorithmus wird ein zu einem Zwischenwert der Berechnung der Modul des Körpers addiert, wenn dieser Zwischenwert ungerade ist. Wenn ein Angreifer beobachten kann, ob diese Addition im i-ten Schritt des Algorithmus ausgeführt wird, lernt er bitweise die zu invertierende Zahl. Bei diesen Algorithmen kann ein Angreifer daher leicht aus Laufzeit, Stromverbrauch oder elektromagnetischer Strahlung Rückschlüsse auf die zu invertierende Zahl ziehen. Algorithmen auf Basis des kleinen Fermatschen Satzes haben zwar einen gleichförmigen Ablauf, sind aber wesentlich langsamer und daher ineffizienter.

Allgemein verwendete Techniken zur Abwehr von Seitenkanalangriffen versuchen entweder, den Signal-Rausch-Abstand zwischen der zu schützenden Information und allen anderen messbaren Signalen zu verschlechtern und damit die Beobachtung der geheimen Information zu erschweren oder verwenden Randomisierungstechniken, um die Korrelation zwischen der zu schützenden Information und den gemessenen Werten aufzuheben. Methoden, um die Beobachtung der geheimen Information zu erschweren, umfassen beispielsweise die Vermeidung datenabhängiger Verzweigungen, die von schützenswerter Information abhängen, Verwendung von Programmschritten mit wenig schwankendem Stromprofil oder von Programmteilen, deren Laufzeit nicht mehr von den Berechnungsdaten abhängt, Ausführen von zufälligen und/oder redundanten Programmteilen usw. Diese Gegenmaßnahmen schützen im Allgemeinen vor SPA-Attacken, haben jedoch den Nachteil, dass die Implementierung unvorteilhaften Einschränkungen unterliegt.

Randomisierungstechniken zur Aufhebung der Korrelation zwischen zu schützender Information und gemessenen Werten dienen zur Abwehr der statistischen Analysemethoden der DPA. Solche Maßnahmen bestehen üblicherweise aus Maskieren der geheimen Informationen mit zufälligen Werten. Bei jeder neuen Berechnung werden dabei neue unabhängige Zufallszahlen für die Masken gewählt. Ein Angreifer misst dann jedes Mal eine für ihn zufällig erscheinende Berechnung, weil er die Maske nicht kennt und kann keine einfachen Korrelationen zwischen gemessenen physikalischen Werten und Input- oder Outputdaten feststellen.

Ausgehend von den Problemen und Nachteilen des Standes der Technik liegt der Erfindung die Aufgabe zugrunde, ein Verfahren zur Berechnung der moduaren Inversen zu schaffen, welches eine Resistenz gegen Seitenkanalangriffe aufweist und gleichzeitig die Einschränkungen bei der Implementierung und den zusätzlichen Aufwand zum Zwecke des Schutzes gegen Seitenkanalangriffe gering hält.

Erfindungsgemäß wird hierzu ein Verfahren nach Anspruch 1 vorgeschlagen. Daneben werden ein Tachograph nach Anspruch 3 und eine Datenkarte nach Anspruch 4 vorgeschlagen, die jeweils derart ausgebildet sind, dass sie nach dem Verfahren des Anspruchs 1 arbeiten. Die jeweils rückbezogenen Unteransprüche beinhalten vorteilhafte Weiterbildungen.

Die erfindungsgemäße Technik erlaubt es, beliebige Implementierungen von Verfahren zur Berechnung modularer Inversionen (auch die sehr effizienten Algorithmen auf Basis der Berechnung eines größten gemeinsamen Teilers) durch eine einfache Transformation gegen SPA und DPA abzusichern.

Die Verwendung einer arithmetischen homomorphen Maskierungstechnik nach der Erfindung hat unter anderem den Vorteil, dass die Maskierung eingangs der Berechnung durchgeführt werden kann und ausgangs das Ergebnis demaskierbar ist und gleichzeitig eine Absicherung der Implementierung zur modularen Inversion gegen SPA- und DPA-Angriffe gegeben ist.

Eine vorteilhafte Anwendung der Erfindung bei einem Verschlüsselungs- oder Entschlüsselungsverfahren, insbesondere in einem erfindungsgemäßen Tachographen oder einem erfindungsgemäßen mobilen Datenträger ist beispielsweise die notwendige Inversion bei der Erzeugung digitaler Signaturen nach dem Digital-Signature-Standard DSA:
Sei p eine Primzahl, q | p-1 eine Primzahl, 0 < g < p ein Erzeuger der zyklischen Untergruppe der Ordnung q in (Z/pZ)^{*}, 0 < a < q ein geheimer Schlüssel, A = g^a mod p der zugehörige öffentliche Schlüssel und 0 <= m < p die zu signierende Nachricht. Zur Berechnung der Signatur (r, s) zur Nachricht m und öffentlichem Schlüssel A werden gemäß DSA folgende Rechenschritte von der Recheneinheit ausgeführt:
   1) Wahl einer zufälligen Zahl 0 < k < q, die geheim gehalten werden muss
   2) Berechnung von r = (a^k mod p) mod q
   3) Berechnung der modularen Inversion h = 1/k mod q mittels Modul M
   4) Berechnung von s = h*(m+a*r) mod q

Die Berechnung der modularen Inversion in Schritt 3) kann besonders vorteilhaft erfindungsgemäß gegen SPA geschützt werden, damit die geheime zufällige Zahl k, der so genannte ephemeral Key, nicht dem Angreifer bekannt wird. Falls ein Angreifer den ephemeral Key k erfährt, könnte er den geheimen Schlüssel a der Person, die diese Signatur erstellt, ausrechnen.

Das erfindungsgemäße Modul M, welches eine Implementierung zur Berechnung modularer Inverser in einem endlichen Körper K aufweist, kann beispielsweise aus einem Element a, welches dem endlichen Körper K angehört in seitenkanalresistenter Weise das modulare Inverse bestimmen. Hierbei arbeitet das erfindungsgemäße Verfahren beispielsweise in folgenden Schritten:
1) die Recheneinheit wählt ein zufälliges Element c aus K
2) die Recheneinheit bestimmt d = a*c
3) das Modul M bestimmt das Inverse e = M(d)
4) die Recheneinheit bestimmt b = e*c
5) die Recheneinheit setzt den Rückgabewert r := b

Ein Angreifer beobachtet in Schritt 3) lediglich die Inversion eines zufälligen und gleichverteilt gewählten Körperelementes d, das unabhängig vom eigentlichen Input a der Berechnung ist. Da ihm das zufällig gewählte Element c nicht bekannt ist, kann er sowohl durch SPA- als auch durch DPA-Angriffe keine Informationen aus den von M ausgeführten Berechnungsschritten erhalten.

Ein Vorteil des Verfahrens besteht auch darin, dass eine ungeschützte Implementierung erfindungsgemäß nur um die Schritte 1), 2), 4) und 5) erweitert werden müssen, um Resistenz gegen SPA und DPA zu erhalten. Insbesondere lassen sich die effizienten Verfahren zur Berechnung modularer Inverse auf Basis des euklidischen Algorithmus ohne Änderungen einsetzen. Der zusätzliche Rechenaufwand ist dabei wesentlich geringer als bei Verfahren zur Inversion, die auf dem kleinen Fermatschen Satzes beruhen.

Eine zweckmäßige Weiterbildung des erfindungsgemäßen Verfahrens sieht vor, dass die Zwischenergebnisse c, d und e nach den jeweiligen Rechenschritten gelöscht werden.

In der Folge wird die Erfindung anhand eines speziellen Ausführungsbeispiels unter Bezugnahme auf Zeichnungen näher erläutert, wobei die Erfindung nicht auf die Darstellungen dieses Beispiels beschränkt ist. Es zeigen:
- Fig. 1: eine schematische perspektivische Darstellung eines erfindungsgemäßen Tachographen mit einer erfin- dungsgemäßen Datenkarte,
- Fig. 2: eine schematische Darstellung des Ablaufs nach dem erfindungsgemäßen Verfahren.

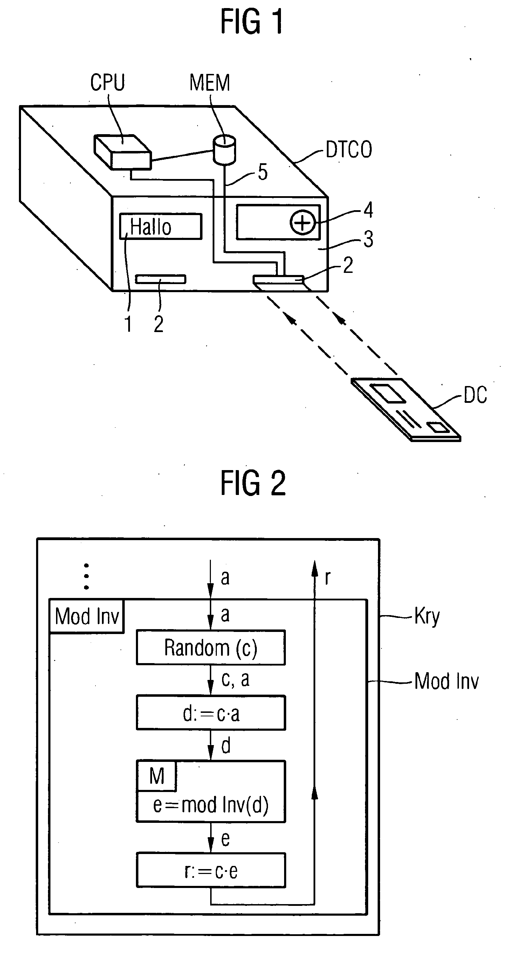

In Figur 1 ist ein erfindungsgemäßer Tachograph DTCO und eine erfindungsgemäße Datenkarte DC dargestellt. Die Datenkarte DC kann in den DTCO durch einen von zwei Aufnahmeschächten 2 eingeschoben werden, so dass während einer Datenübertragung zwischen den beiden Elementen die Datenkarte DC in dem Tachographen DTCO von außen unzugänglich aufgenommen ist. Der Tachograph DTCO weist auf seiner Frontseite 3 neben den beiden Aufnahmeschächten 2 eine Anzeigeeinheit 1 und Bedienelemente 4 auf. Mittels Datenleitungen 5 tritt die Datenkarte DC nach Eingabe in einen Aufnahmeschacht 2 mit einem zentralen Prozessor CPU in Verbindung, der auf einen internen Speicher MEM Zugriff hat. Die Datenkarte weist ebenfalls einen nicht im Einzelnen dargestellten internen Speicher und einen zentralen Prozessor auf.
Die Datenübertragung zwischen dem Tachographen DTCO und der Datenkarte DC erfolgt mittels eines Sitzungsschlüssels verschlüsselt, wobei während der Verschlüsselung und der Entschlüsselung die zentralen Prozessoren CPU des Tachographen DTCO und der Datenkarte DC unter anderem eine modulare Inverse eines Eingangswertes A bestimmen. Hierzu machen die Prozessoren CPU von dem in Figur 2 dargestellten Modul KRY Gebrauch.

Das Modul KRY ist Bestandteil eines Ablaufes der Verschlüsselung. Der Eingangswert a wird an das Modul KRY übergeben und binnen dieses Moduls an das Modul Mod Inv weitergegeben. Das Modul MOd Inv bestimmt zunächst eine Zufallszahl C und multipliziert diese mit dem Eingangswert a zu einem Produkt d. Mittels des Moduls M wird die modulare Inverse e des Produktes d bestimmt und anschließend mit der Zufallszahl c multipliziert. Ein Rückgabewert r wird diesem Produkt gleichgesetzt und an das Modul KRY als Ergebnis zurückgegeben.

## Patentansprüche

1. Verfahren zur seitenkanalangriffsresistenten Verschlüsselung und/oder Entschlüsselung von Daten mittels einer Recheneinheit, wobei in einem Schritt der Verschlüsselung und/oder Entschlüsselung ein Rückgabewert (r) als modulare Inverse eines Eingangswertes (a) mittels eines Moduls (M) bestimmt wird, **dadurch gekennzeichnet, dass**
- in einem ersten Unterschritt eine Zufallszahl (c) gewählt wird,
- in einem zweiten Unterschritt ein erstes Produkt (d) aus dem Eingangswert (a) und der Zufallszahl (c) erzeugt wird,
- in einem dritten Unterschritt das Modul (M) die modulare Inverse (e) des ersten Produktes (d) durch eine bezüglich eines Seitenkanalangriffs ungeschützte Implementierung eines Algorithmus zur Berechnung des modularen Inversen (e) bestimmt wird,
- in einem vierten Unterschritt ein zweites Produkt (b) der Zufallszahl (c) mit der modularen Inversen (e) bestimmt wird,
- in einem fünften Unterschritt der Rückgabewert (r) gleich dem zweiten Produkt (b) gesetzt wird.

2. Verfahren nach Anspruch 1, **dadurch gekennzeichnet, dass** die Zufallszahl (c), das erste Produkt (d), das zweite Produkt (b) und die modulare Inverse (e) nach Bestimmung des Rückgabewertes (r) gelöscht werden.

3. Verfahren nach Anspruch 1 oder 2, **dadurch gekennzeichnet, dass** die ungeschützte Implementierung auf dem euklidischen Algorithmus basiert.

4. Tachograph (DTCO) mit einer Recheneinheit, wobei die Recheneinheit Daten verschlüsselt und/oder entschlüsselt und derart ausgebildet ist, dass in einem Schritt der Verschlüsselung und/oder Entschlüsselung ein Rückgabewert (r) als modulare Inverse eines Eingangswertes (a) mittels eines Moduls (M) der Recheneinheit bestimmt wird, **dadurch gekennzeichnet, dass** die Recheneinheit dazu eingerichtet ist
- in einem ersten Unterschritt eine Zufallszahl (c) zu wählen,
- in einem zweiten Unterschritt ein erstes Produkt (d) aus dem Eingangswert (a) und der Zufallszahl (c) zu erzeugen,
- in einem dritten Unterschritt mittels des Moduls (M) die modulare Inverse (e) des ersten Produktes (d) durch eine bezüglich eines Seitenkanalangriffs ungeschützte Implementierung eines Algorithmus zur Berechnung des modularen Inversen (e) zu bestimmen,
- in einem vierten Unterschritt ein zweites Produkt (b) der Zufallszahl (c) mit der modularen Inversen (e) zu bestimmen,
- in einem fünften Unterschritt der Rückgabewert (r) gleich dem zweiten Produkt (b) zu setzen.

5. Mobiler Datenträger, insbesondere als Datenkarte ausgebildeter Datenträger, mit einer Recheneinheit, wobei die Recheneinheit Daten verschlüsselt und/oder entschlüsselt und derart ausgebildet ist, dass in einem Schritt der Verschlüsselung und/oder Entschlüsselung ein Rückgabewert (r) als modulare Inverse eines Eingangswertes (a) mittels eines Moduls (M) der Recheneinheit bestimmt wird, **dadurch gekennzeichnet, dass** die Recheneinheit dazu eingerichtet ist
- in einem ersten Unterschritt eine Zufallszahl (c) zu wählen,
- in einem zweiten Unterschritt ein erstes Produkt (d) aus dem Eingangswert (a) und der Zufallszahl (c) zu erzeugen,
- in einem dritten Unterschritt mittels des Moduls (M) die modulare Inverse (e) des ersten Produktes (d) durch eine bezüglich eines Seitenkanalangriffs ungeschützte Implementierung eines Algorithmus zur Berechnung des modularen Inversen (e) zu bestimmen,
- in einem vierten Unterschritt ein zweites Produkt (b) der Zufallszahl (c) mit der modularen Inversen (e) zu bestimmen,
- in einem fünften Unterschritt der Rückgabewert (r) gleich dem zweiten Produkt (b) zu setzen.

## Claims

1. Method for side-channel-attack-resistant encryption and/or decryption of data using a computation unit, where an encryption and/or decryption step involves determining a return value (r) as the modular inverse of an input value (a) using a module (M), **characterized in that**
- a first substep involves selecting a random number (c),
- a second substep involves producing a first product (d) from the input value (a) and the random number (c),
- a third substep involves the module (M) determining the modular inverse (e) of the first product (d) by implementing an algorithm for calculating the modular inverse (e) without protection against a side channel attack,
- a fourth substep involves determining a second product (b) from the random number (c) and the modular inverse (e),
- a fifth substep involves equating the return value (r) to the second product (b).

2. Method according to Claim 1, **characterized in that** the random number (c), the first product (d), the second product (b) and the modular inverse (e) are erased following determination of the return value (r).

3. Method according to Claim 1 or 2, **characterized in that** the unprotected implementation is based on the Euclidean algorithm.

4. Tachograph (DTCO) having a computation unit, where the computation unit encrypts and/or decrypts data and is in a form such that an encryption and/or decryption step involves determining a return value (r) as the modular inverse of an input value (a) using a module (M) of the computation unit, **characterized in that** the computation unit is set up to
- use a first substep to select a random number (c),
- use a second substep to produce a first product (d) from the input value (a) and the random number (c),
- use a third substep to use the module (M) to determine the modular inverse (e) of the first product (d) by implementing an algorithm for calculating the modular inverse (e) without protection against a side channel attack,
- use a fourth substep to determine a second product (b) from the random number (c) and the modular inverse (e),
- use a fifth substep to equate the return value (r) to the second product (b).

5. Mobile data storage medium, particularly a data storage medium in the form of a data card, having a computation unit, where the computation unit encrypts and/or decrypts data and is in a form such that an encryption and/or decryption step is used to determine a return value (r) as the modular inverse of an input value (a) using a module (M) of the computation unit, **characterized in that** the computation unit is set up to
- use a first substep to select a random number (c),
- use a second substep to produce a first product (d) from the input value (a) and the random number (c),
- use a third substep to use the module (M) to determine the modular inverse (e) of the first product (d) by implementing an algorithm for calculating the modular inverse (e) without protection against a side channel attack,
- use a fourth substep to determine a second product (b) from the random number (c) and the modular inverse (e),
- use a fifth substep to equate the return value (r) to the second product (b).

## Revendications

1. Procédé permettant, au moyen d'une unité informatique, le cryptage et/ou le décryptage, résistant aux attaques par voie latérale, de données, où, au cours de la phase de cryptage et/ou de décryptage, une valeur de restitution (r) est déterminée, au moyen d'un module (M), en tant qu'inverse modulaire d'une valeur d'entrée (a), **caractérisé par le fait que,**
- au cours d'une première phase partielle, on choisit un nombre aléatoire (c),
- au cours d'une deuxième phase partielle, on forme un premier produit (d) de la valeur d'entrée (a) avec le nombre aléatoire (c),
- au cours d'une troisième phase partielle, on détermine, au moyen du module (M), l'inverse modulaire (e) du premier produit (d) grâce à une implémentation, non protégée contre une attaque par voie latérale, d'un algorithme destiné au calcul de l'inverse modulaire (e),
- au cours d'une quatrième phase partielle, on détermine un deuxième produit (b) du nombre aléatoire (c) avec l'inverse modulaire (e).
- au cours d'une cinquième phase partielle, on assigne la valeur du deuxième produit (b) à la valeur de restitution (r).

2. Procédé selon la revendication 1, **caractérisé par le fait que** la valeur aléatoire (c), le premier produit (d), le deuxième produit (b) et l'inverse modulaire (e) sont effacés après la détermination de la valeur de restitution (r).

3. Procédé selon la revendication 1 ou 2, **caractérisé par le fait que** l'implémentation non protégée est effectuée sur la base de l'algorithme d'Euclide.

4. Tachygraphe (DTCO) comportant une unité informatique, où l'unité informatique crypte et/ou décrypte des données et est conçue de manière telle que, au cours de la phase de cryptage et/ou de décryptage, une valeur de restitution (r) est déterminée, au moyen d'un module (M) de l'unité informatique, en tant qu'inverse modulaire d'une valeur d'entrée (a), **caractérisé par le fait que** l'unité informatique est programmée de telle manière que,
- au cours d'une première phase partielle, on choisit un nombre aléatoire (c),
- au cours d'une deuxième phase partielle, on forme un premier produit (d) de la valeur d'entrée (a) avec le nombre aléatoire (c),
- au cours d'une troisième phase partielle, on détermine, au moyen du module (M), l'inverse modulaire (e) du premier produit (d) grâce à une implémentation, non protégée contre une attaque par voie latérale, d'un algorithme destiné au calcul de l'inverse modulaire (e),
- au cours d'une quatrième phase partielle, on détermine un deuxième produit (b) du nombre aléatoire (c) avec l'inverse modulaire (e),
- au cours d'une cinquième phase partielle, on assigne la valeur du deuxième produit (b) à la valeur de restitution (r).

5. Support mobile de données, notamment support de données conçu sous la forme de carte à puce, où l'unité informatique crypte et/ou décrypte des données et est conçue de manière telle que, au cours de la phase de cryptage et/ou de décryptage, une valeur de restitution (r) est déterminée, au moyen d'un module (M) de l'unité informatique, en tant qu'inverse modulaire d'une valeur d'entrée (a), **caractérisé par le fait que** l'unité informatique est programmée de telle manière que,
- au cours d'une première phase partielle, on choisit un nombre aléatoire (c),
- au cours d'une deuxième phase partielle, on forme un premier produit (d) de la valeur d'entrée (a) avec le nombre aléatoire (c),
- au cours d'une troisième phase partielle, on détermine, au moyen du module (M), l'inverse modulaire (e) du premier produit (d) grâce à une implémentation, non protégée contre une attaque par voie latérale, d'un algorithme destiné au calcul de l'inverse modulaire (e),
- au cours d'une quatrième phase partielle, on détermine un deuxième produit (b) du nombre aléatoire (c) avec l'inverse modulaire (e),
- au cours d'une cinquième phase partielle, on assigne la valeur du deuxième produit (b) à la valeur de restitution (r).
